# FASCICULE DE BREVET EUROPEEN

(11) **EP 1 105 238 B1**
(45) Date de publication et mention de la délivrance du brevet: **02.04.2003**
(21) Numéro de dépôt: 00951617.0
(22) Date de dépôt: 20.06.2000
(51) Int. Cl.: B23B 5/16

(54) **DISPOSITIF DE GRATTAGE D'UN TUBE**
ABSTREIFVORRICHTUNG FÜR EIN ROHR
TUBE SCRAPING DEVICE

(30) Priorité: 22.06.1999 FR 9907945
(43) Date de publication de la demande: 13.06.2001
(73) Titulaire: Gaz de France (GDF) Service National, 75017 Paris (FR)
(72) Inventeur: PFEIFFER, Dominique, F-60950 Ermenonville (FR); LECOINTE, Patrick, F-95570 Bouffemont (FR)
(74) Mandataire: Lerner, François
(86) Numéro de dépôt international: FR0001698
(87) Numéro de publication internationale: WO00078486

(56) Documents cités:
- EP-A- 0 689 928
- BE-A- 882 419
- DE-U- 29 612 667

## Description

Le domaine de la présente invention est celui des dispositifs tels que décrits dans le préambule de la revendication 1. Un tel dispositif manuel de grattage est connu du document BE-A-882 419. Ces dispositifs sont utilisés pour améliorer l'état de surface d'une partie de canalisation, par exemple avant son soudage sur une autre canalisation. On utilise en particulier des dispositifs manuels de grattage par rotation autour de la surface externe d'une partie d'une canalisation principale d'amenée de gaz naturel avant sa connexion à une canalisation secondaire, par l'intermédiaire d'une prise de branchement.

Dans le cadre de la technique dite polyéthylène, le raccordement de deux canalisations dans lesquelles circule par exemple du gaz naturel, ou plus précisément le raccordement de la dérivation d'une prise de branchement sur une canalisation secondaire, est réalisé par électrosoudage d'un manchon autour de ces deux parties tubulaires. Pour que le soudage soit effectif, il est préférable d'enlever la surface externe oxydée de la canalisation secondaire et de la dérivation de la prise de branchement. L'obtention d'un bon soudage nécessite donc un grattage préalable de ces parties. Ce grattage est généralement réalisé au moyen d'un grattoir type grattoir à peinture (manche en bois muni d'une lame métallique transversale). Le grattage avec ce type d'outil n'est pas uniforme et l'épaisseur de matière enlevée n'est pas maîtrisée. Les éléments tubulaires grattés présentent en particulier de nombreuses facettes. De plus le grattage de la partie inférieure de l'élément tubulaire n'est pas aisé et peut provoquer des rayures importantes quand l'outil ripe.

Des grattoirs annulaires ont également été réalisés dans le passé, comme celui décrit dans EP-A-0 649 694. Ces grattoirs étant conçus pour du tube en barre droite, ils ne sont pas toujours efficaces sur des tubes ovalisés comportant un certain rayon de courbure (les tubes de petit diamètre sont livrés en couronnes). De plus, cet outillage est très complexe à réaliser, donc coûteux, et assez fragile à utiliser étant donné le nombre de pièces qui le compose.

D'autre part, le document BE-A-882 419 décrit un outil d'écroutage de tubes comprenant :
- une structure annulaire présentant un passage s'étendant suivant un axe principal et étant délimité par une surface périphérique interne de la structure annulaire destinée à recevoir étroitement le tube pour le guider,
- une lame fixée à la structure annulaire et présentant une arête tranchante débordant de la surface périphérique interne, pour former saillie à l'intérieur du passage.

Toutefois, cet outil sert essentiellement à dresser et à chanfreiner le tube au moven de deux lames disposées perpendiculairement, de sorte que l'operation de grattage de la surface externe du tube ne peut être réalisée que sur une courte distance par rapport à l'extrémité du tube. Par conséquent, cet outil ne permet pas d'effectuer ensuite un soudage satisfaisant de la prise de branchement. Ce problème est résolu par un dispositif tel que défini dans la revendication 1.

La solution de l'invention permettant de réaliser un surfaçage du tube, autrement dit un grattage de sa surface externe sur une longueur satisfaisante, consiste en ce que le passage traverse la structure annulaire de part en part et soit partiellement obstruée par un épaulement définissant une zone de restriction du passage, ledit épaulement présentant une hauteur, par rapport à la surface périphérique interne de la structure annulaire, légèrement inférieure à celle de la saillie formée par l'arête tranchante par rapport à la surface périphérique interne de la structure annulaire, de sorte que l'épaulement définisse une butée pour une partie non grattée du tube et autorise le passage d'une partie grattée du tube à travers ladite restriction.

Ainsi, une partie du tube ne peut ressortir du dispositif que si toute cette partie a été entièrement surfacée. Autrement dit, le dispositif régule de lui-même son avance par rapport au tube suivant l'axe principal en ne l'autorisant que si le grattage a été complètement effectué sur la partie de tube précédemment grattée. Dans ces conditions, on ne risque pas de réaliser un grattage en forme d'hélice en laissant subsister des parties de tubes non grattées au sein de l'hélice. Les revendications dépendantes décrivent des réalisations avantageuses de l'invention.

Dans une réalisation avantageuse de l'invention l'arête tranchante s'étend axialement dans le passage, à l'écart de l'épaulement et au moins jusqu'en limite de la zone de restriction du passage, voire en partie à l'intérieur de ladite zone.

Ainsi, en maintenant un effort de poussée sur le dispositif combiné avec un effort de rotation, le dispositif avance automatiquement par rapport au tube, au fur et à mesure de son grattage, de sorte que l'on effectue de fait un surfaçage continu.

En outre, une réalisation avantageuse du dispositif selon l'invention présente les caractéristiques suivantes :
- la structure annulaire est légèrement flexible et a une épaisseur suivant l'axe principal et une largeur radialement audit axe,
- ladite structure annulaire présente une fente radiale traversant toute l'épaisseur et toute la largeur de la structure annulaire, et
- la fente radiale est sensiblement diamétralement opposée à la lame.

Ainsi, la structure annulaire peut se déformer de façon à absorber tant à la mise en place que pendant le grattage de légères déformations en diamètre du tube, telles que l'ovalisation éventuelle de l'élément tubulaire à gratter. Cette fente permet aussi de moduler manuellement le serrage du tube, ainsi que l'épaisseur du copeau dans une certaine mesure.

De façon à assurer une bonne variation de diamètre interne du passage de la structure annulaire, la fente de la structure annulaire s'étend sensiblement suivant l'axe principal de la structure annulaire.

De manière à améliorer la sortie du copeau, la structure annulaire présentera de préférence une ouverture radiale s'étendant sur une partie de l'épaisseur annulaire de la structure et radialement sur toute la largeur de la structure annulaire, la lame s'étendant au moins en partie à l'intérieur ou dans le prolongement de ladite ouverture pour évacuer le copeau formé lors du grattage.

Afin de rendre le dispositif facile à réaliser et léger, la structure annulaire est avantageusement partiellement évidée et réalisée en matière(s) plastique(s).

Selon une autre réalisation avantageuse de l'invention, la structure annulaire présente, sur sa surface externe, des formes en creux pour la prise en main du dispositif, en particulier des formes concaves adaptées pour recevoir le pouce et l'index ou le majeur d'une main. La prise en main est donc améliorée pour faire tourner facilement le dispositif autour du tube et assurer un grattage circonférentiel (hélicoïdal), régulier et facile à réaliser car il ne requiert qu'une légère pression des doigts de l'utilisateur.

De manière à améliorer le grattage et la formation du copeau, la lame présentera en section une encoche incurvée à proximité d'une extrémité de son arête tranchante.

Afin de réduire les coûts de fabrication sans pour autant réduire les performances du dispositif, la lame sera de préférence collée dans un creux de la structure annulaire et présentera une échancrure ou une protubérance dont la forme est propre à épouser une forme complémentaire aménagée dans le creux de la structure annulaire, pour bloquer latéralement la lame en rotation. Ainsi, tout en étant collée, la lame n'en est pas moins maintenue mécanique par obstacle, pour éviter tout défaut dans le grattage dû à un déplacement intempestif de celle-ci lorsque l'on tourne le dispositif.

De plus, afin d'améliorer le maintien de la lame et sa résistance, dans une réalisation avantageuse de l'invention :
- la lame s'étend sur une distance déterminée dans un creux ménagé dans la structure annulaire suivant l'axe principal,
- l'arête tranchante de la lame est interrompue par un décrochement, de sorte de la lame ne vient en saillie de la surface périphérique interne de la structure annulaire que sur une partie de ladite distance déterminée.

Ainsi, la longueur de la lame peut être augmentée pour une longueur d'arête donnée, ce qui réduit les contraintes exercées sur la lame.

L'invention et sa mise en oeuvre apparaîtront encore plus clairement à l'aide de la description qui va suivre, faite en référence aux dessins dans lesquels :
- la figure 1 est une vue en coupe médiane d'une prise de branchement montée sur une canalisation principale et reliée à une canalisation secondaire,
- la figure 2 est une vue de face d'un dispositif conforme à l'invention,
- la figure 3 est une vue de derrière du dispositif,
- la figure 4 est une vue en coupe du dispositif, suivant le plan repéré IV-IV à la figure 2,
- la figure 5 est une vue à échelle agrandie de la lame,
- la figure 6 est une vue à échelle également agrandie de la lame selon la flèche repérée VI de la figure 5,
- la figure 7 est une vue à échelle agrandie du détail repéré VII à la figure 4, sans la lame.

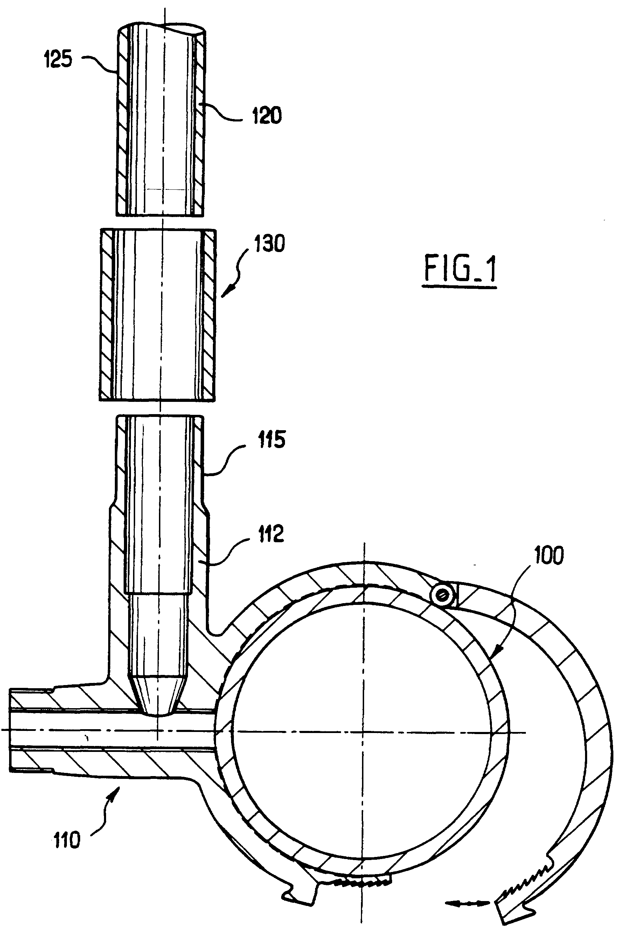

Sur la figure 1 on voit représentée une prise de branchement 110 pour relier, via une dérivation latérale 112, une conduite secondaire 120 et une conduite principale 100 transportant par exemple du gaz naturel pour alimenter des habitations (maisons individuelles, immeubles). La conduite secondaire 120, tout comme la dérivation latérale 112 de la prise de branchement 110, sont typiquement réalisées en matière plastique, par exemple en polyéthylène et présentent un diamètre externe de préférence identique. La conduite secondaire 120 doit être raccordée à la dérivation 112 de la prise de branchement 110 et ces pièces sont soudées l'une à l'autre par exemple par chauffage par l'intermédiaire d'un manchon 130 externe dont le diamètre interne est sensiblement égal au diamètre externe de la canalisation secondaire 120 et de la dérivation 112 de la prise de branchement 110. Afin qu'il n'y ait pas de risque de fuite lors du rétablissement du passage du gaz, la soudure doit être parfaitement étanche. Pour cela, on utilise un dispositif 10 décrit plus loin afin de gratter la surface externe 115 de la dérivation 112 et de la surface externe 125 de la canalisation secondaire 120 sur une longueur au moins équivalente à celle d'un demi-manchon 130. Ainsi, les surfaces externes 115 et 125 de la dérivation 112 et de la canalisation secondaire 120 sont prêtes pour que l'opération de soudage du manchon 130 (électrosoudage) se fasse dans les meilleures conditions possibles.

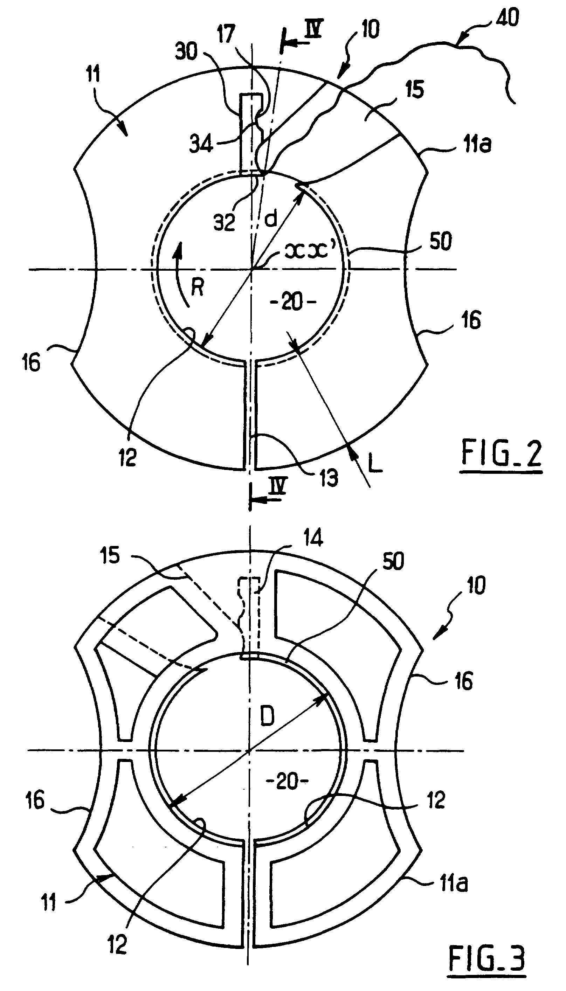

Sur la figure 2 on voit représenté un dispositif manuel 10 de grattage par rotation autour d'un tube en matière plastique, typiquement de la dérivation 112 de la prise de branchement 110 et de la canalisation secondaire 120 de la figure 1.

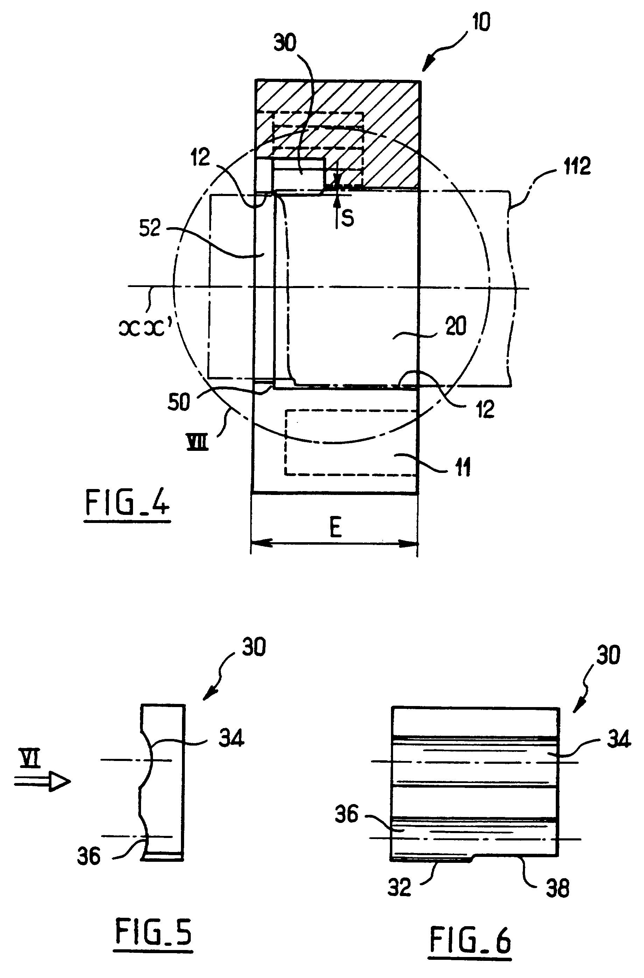

Ce dispositif 10 se présente comme une structure annulaire 11 (une bague) évidée (voir figure 3) et typiquement réalisée en matière plastique (PVC par exemple) présentant un axe principal xx' (voir figure 4) selon lequel s'étend un passage débouchant 20 entouré par une paroi circulaire 12 de la structure annulaire 11. Cette structure annulaire 11 présente aussi une épaisseur E (voir figure 4) selon l'axe xx' et une largeur L perpendiculairement à ce même axe (radialement).

Le passage 20 présente un diamètre interne D adapté pour que le dispositif 10 puisse être passé autour des tubes 112 et 120 dont les surfaces externes 115 et 125 sont à gratter, c'est-à-dire légèrement supérieur au diamètre externe de ces tubes.

Un épaulement 50 situé sur la surface 12 de la structure annulaire 11, parallèlement à l'axe xx', réduit localement le passage 20 à une extrémité axiale de la structure annulaire 11. La zone 52 de restriction du passage 20 formée par l'épaulement 50 présente un diamètre d inférieur au diamètre D à l'écar de cet épaulement.

La structure annulaire 11 est par ailleurs fendue sur toute son épaisseur E et toute sa largeur L de telle sorte que la matière plastique formant ladite structure annulaire 11 est en réalité interrompue par une fente 13. Cette fente 13 sensiblement diamétralement opposée à une lame 30 et disposée entre des zones 16 en forme de creux prévues pour la prise en main du dispositif par un utilisateur, confère l'élasticité nécessaire au dispositif 10 pour absorber les défauts (ovalisation) éventuels de l'élément tubulaire 112 à gratter, tant à la mise en place que pendant le grattage.

Sur les figures 2 et 3, la fente 13 est rectiligne, s'étend suivant l'axe principal xx' et présente une largeur sensiblement constante. Elle pourrait présenter en section une forme légèrement en V.

La lame 30, de préférence métallique et non interchangeable (pour des questions de coût) s'étend suivant l'axe principal xx'. Elle est insérée (par exemple collée) dans un creux 14 aménagé dans la structure annulaire 11. Elle présente une arête tranchante 32 faisant légèrement saillie de la surface 12 de la structure annulaire, à l'intérieur du passage 20, en direction de l'axe principal xx' du dispositif 10.

Proche de la lame 30, c'est-à-dire en aval selon un sens de rotation du dispositif référencé R sur la figure 2 (sens des aiguilles de préférence), la structure annulaire 11 présente une ouverture 15 qui ne s'étend pas sur toute son épaisseur E mais qui traverse toute sa largeur L, afin de permettre à un copeau 40 de matière plastique formé lors du grattage de s'échapper du dispositif 10.

Comme on peut le voir sur les figures 2 et 5, la lame 30 présente en section une échancrure incurvée 34 coopérant avec une protubérance 17 de forme complémentaire prévue dans le creux 14 de la structure annulaire 11 afin de bloquer la lame 30 en rotation selon l'axe xx' lors du grattage (si la lame est en plus collée, elle sera maintenue de façon plus ferme encore).

La lame 30 présente également en section, à proximité de son arête tranchante 32, une encoche 36 incurvée destinée à améliorer le grattage ainsi que la formation et le développement du copeau.

L'arête tranchante 32 de la lame 30 présente un décrochement axial 38, sensiblement en limite de l'ouverture 15. Ainsi, l'arête tranchante 32 s'étend sur une moindre distance que la lame à l'intérieur du creux 14. La partie dépourvue d'arête tranchante n'a pas de fonction de grattage, elle complète la surface utile de la lame pour un maintien efficace dans la cavité 14. L'arête tranchante 32 est disposée entièrement dans le prolongement de l'évidement 15.

Sur la surface externe 11a de la structure annulaire 11, les formes en creux 16 sont prévues (voir figures 2 et 3), pour qu'un utilisateur puisse venir y placer ses doigts, de préférence le pouce et l'index ou le pouce et le majeur, afin de faire tourner le dispositif 10 sans qu'il glisse, et pouvoir jouer manuellement, grâce à la fente 13 d'élasticité, sur la pression exercée sur ledit dispositif. Dans le cas présent, ces formes 16 sont arrondies, concaves et elles sont diamétralement opposées.

L'utilisation du dispositif 10 ainsi décrit est très simple. Après mise en place du grattoir 10 sur le tube 112 puis 120, ou inversement (le tube 112 est représenté en trait fantôme à la figure 4 pour une meilleure lecture), il suffit de le faire tourner autour du tube à gratter dans le sens des aiguilles d'une montre (flèche R sur la figure 2), tout en effectuant une légère pression avec le bout des doigts sur les formes 16 pour faire avancer le grattoir.

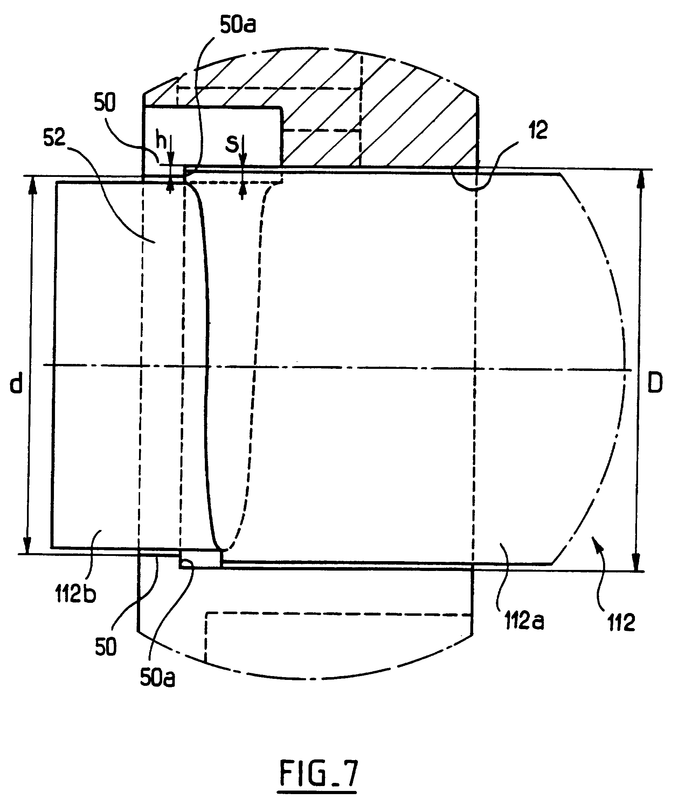

Tel qu'illustré à la figure 7, où la lame 30 n'a pas été représentée pour améliorer la lecture de la figure, la restriction 52 de passage présente un diamètre d qui est inférieur au diamètre du tube avant grattage. Ainsi, une partie non grattée 112a du tube vient en butée contre une face radiale 50a de l'épaulement 50.

La hauteur s de la saillie formée par l'arête tranchante 32 par rapport à la paroi 12 étant supérieure à la hauteur h de l'épaulement 50, une partie grattée 112b du tube passe sans encombre à travers la restriction 52 de passage. La hauteur h de l'épaulement 50 équivaut ici à la moitié de la différence des diamètres D (du passage à l'écart de la zone 52 de restriction du passage) et d (du passage à l'endroit de cette restriction 52).

L'arête 32 de la lame 30 s'étendant continûment dans le passage 12, jusqu'en limite de la zone 52 de restriction du passage formant butée et même légèrement à l'intérieur de cette zone, la partie 112b de tube gratté est augmentée continûment (et inversement pour la zone non grattée 112a) en maintenant la partie non grattée en appui contre la surface radiale 50a de l'épaulement 50 et en faisant tourner le grattoir 10.

Cela permet en particulier une pénétration progressive du grattoir 10 sur les tubes à gratter, évitant ainsi de l'enfoncer trop rapidement (limitation de l'avance de l'outil) et de créer une hélice générant un état de surface insatisfaisant pour le soudage ultérieur.

On obtient ainsi un grattage circonférentiel régulier (pas de facettes ni de rayures fréquemment rencontrées avec les gratteurs manuels traditionnels) et une bonne évacuation du copeau par l'ouverture 15 de la bague 11.

Le faible coût unitaire de ce grattoir fabriqué en série par moulage peut en faire un matériel jetable après une ou plusieurs utilisations.

L'invention n'est nullement limitée au mode de réalisation préférentiel illustré à titre d'exemple.

Ainsi, l'épaulement, s'étendant ici sur presque toute la circonférence du passage (excepté à l'emplacement de l'ouverture 15), pourrait être discontinu, constitué notamment par un (des) plot(s).

La lame pourrait présenter d'autres formes de tranchant, être réalisée dans d'autres matériaux, être reliée à la structure annulaire à l'aide de moyens mécaniques ou bien encore être inclinée par rapport à l'axe xx'.

La structure annulaire pourrait aussi être métallique ou pleine.

Le nombre de formes concaves de la surface externe de la structure annulaire peut être supérieur à deux (4 disposées en opposition par exemple), notamment si le dispositif est d'une taille assez importante (plus de 10 centimètres de diamètre par exemple pour le grattage de tubes de grand diamètre).

Enfin, on peut éventuellement prévoir plusieurs lames, réparties avec des intervalles réguliers les unes par rapport aux autres sur l'intérieur du passage.

## Revendications

1. Dispositif (10) manuel de grattage par rotation autour de la surface externe (115 ; 125) d'un tube (112 ; 120) en matière plastique, le dispositif (10) comprenant :
- une structure annulaire (11) présentant un passage (20) s'étendant suivant un axe principal (xx') et étant délimité par une surface périphérique (12) interne de la structure annulaire destinée à recevoir étroitement le tube pour le guider,
- une lame (30) fixée à la structure annulaire (11) et présentant une arête tranchante (32) débordant de la surface périphérique interne, pour former saillie à l'intérieur du passage (20),
**caractérisé en ce que** le passage traverse la structure annulaire de part en part et est partiellement obstrué par un épaulement (50) définissant une zone de restriction (52) du passage, ledit épaulement présentant une hauteur (h), par rapport à la surface périphérique interne de la structure annulaire, légèrement inférieure à celle (s) de la saillie formée par l'arête tranchante par rapport à la surface périphérique interne de la structure annulaire, de sorte que l'épaulement définisse une butée pour une partie non grattée (112a) du tube et autorise le passage d'une partie grattée (112b) du tube à travers ladite restriction.

2. Dispositif selon la revendication 1, **caractérisé en ce que** l'arête tranchante s'étend axialement dans le passage (20), à l'écart de l'épaulement et au moins jusqu'en limite de la zone de restriction (52) du passage, voire en partie à l'intérieur de ladite zone (52).

3. Dispositif selon la revendication 1 ou la revendication 2, **caractérisé en ce que** :
- la structure annulaire (11) est légèrement flexible et a une épaisseur (E) suivant l'axe principal (xx') et une largeur (L) radialement audit axe,
- ladite structure annulaire présente une fente radiale (13) traversant toute l'épaisseur et toute la largeur de la structure annulaire, et
- la fente radiale (13) est sensiblement diamétralement opposée à la lame (30).

4. Dispositif (10) selon la revendication 3, **caractérisé en ce que** la fente (13) de la structure annulaire (11) s'étend sensiblement suivant l'axe principal (xx') de la structure annulaire.

5. Dispositif (10) selon l'une quelconque des revendications précédentes, **caractérisé en ce que** :
- la structure annulaire a une épaisseur (E) suivant l'axe principal (xx') et une largeur (L) radialement audit axe,
- la structure annulaire (11) présente une ouverture radiale (15) qui s'étend sur une partie de l'épaisseur (E) de la structure annulaire et radialement sur toute la largeur (L) de la structure annulaire, et
- la lame (30) s'étend au moins en partie à l'intérieur ou dans le prolongement de ladite ouverture (15) pour évacuer le copeau formé lors du grattage.

6. Dispositif (10) selon l'une quelconque des revendications précédentes, **caractérisé en ce que** la structure annulaire (11) est partiellement évidée et est réalisée en matière(s) plastique(s).

7. Dispositif (10) selon l'une quelconque des revendications précédentes, **caractérisé en ce que** la structure annulaire (11) présente, sur sa surface externe (11a), des formes en creux (16) pour la prise en main du dispositif (10), en particulier des formes concaves adaptées pour recevoir le pouce et l'index ou le majeur d'une main.

8. Dispositif (10) selon l'une quelconque des revendications précédentes, **caractérisé en ce que** la lame (30) présente en section une encoche incurvée (36) à proximité de son arête tranchante (32).

9. Dispositif (10) selon l'une quelconque des revendications précédentes, **caractérisé en ce que** la lame (30) est collée dans un creux (14) de la structure annulaire (11) et présente une échancrure (34) ou une protubérance dont la forme est propre à épouser une forme complémentaire aménagée dans le creux (14) de la structure annulaire (11), pour bloquer latéralement la lame (30) en rotation.

10. Dispositif selon l'une quelconque des revendications précédentes, **caractérisé en ce que**:
- la lame (30) s'étend sur une distance déterminée dans un creux ménagé dans la structure annulaire suivant l'axe principal,
- l'arête tranchante (32) de la lame est interrompue par un décrochement (38), de sorte de la lame ne vient en saillie de la surface périphérique interne de la structure annulaire que sur une partie de ladite distance déterminée.

## Patentansprüche

1. Manuelle Vorrichtung (10) zum Schaben durch eine Rotationsbewegung um die äußere Oberfläche (115; 125) eines Rohrs (112; 120) aus Kunststoff, wobei die Vorrichtung (10) umfasst:
- eine ringförmige Struktur (11), die eine Öffnung (20) aufweist, welche sich längs einer Hauptachse (xx') erstreckt und durch eine innere, periphere Oberfläche (12) der ringförmigen Struktur begrenzt ist, die dazu bestimmt ist, das Rohr in dicht schließender Form aufzunehmen, um es zu führen,
- ein Messer (30), das an der ringförmigen Struktur (11) befestigt wird und eine Schneidkante (32) aufweist, welche von der inneren, peripheren Oberfläche übersteht, um in das Innere der Öffnung (20) hineinzuragen,
**gekennzeichnet dadurch, dass** die Öffnung die ringförmige Struktur durchläuft und teilweise durch eine Schulter (50) blockiert wird, die eine Einschnürungszone (52) für die Öffnung festlegt, wobei diese Schulter eine Höhe (h) in Bezug auf die innere, periphere Oberfläche der ringförmigen Struktur aufweist,
und zwar geringfügig kleiner als diejenige(n) der Auskragung, die durch die Schneidkante in Bezug auf die innere, periphere Oberfläche der ringförmigen Struktur gebildet wird, so dass die Schulter einen Anschlag für ein nicht geschabtes Stück (112a) des Rohrs bildet und den Durchlass eines geschabten Stücks (112b) des Rohrs durch die Einschnürung gestattet.

2. Vorrichtung nach Anspruch 1, **gekennzeichnet dadurch, dass** die Schneidkante sich in axialer Richtung in die Öffnung (20) im Abstand von der Schulter wenigstens bis zur Grenze der Einschnürungszone (52) der Öffnung und sogar zum Teil bis in das Innere dieser Zone (52) erstreckt.

3. Vorrichtung nach Anspruch 1 oder Anspruch 2, **gekennzeichnet dadurch, dass**:
- die ringförmige Struktur (11) leicht flexibel ist und eine Dicke (E) längs der Hauptachse (xx') und eine Breite (L) in radialer Richtung zu dieser Achse aufweist,
- die ringförmige Struktur einen radial verlaufenden Schlitz (13) aufweist, der die gesamte Dicke und die gesamte Breite der ringförmigen Struktur durchquert, und
- der radial verlaufende Schlitz (13) im Wesentlichen dem Messer (30) diametral gegenüberliegt.

4. Vorrichtung (10) nach Anspruch 3, **gekennzeichnet dadurch, dass** der radial verlaufende Schlitz (13) der ringförmigen Struktur (11) sich im Wesentlichen längs der Hauptachse (xx') der ringförmigen Struktur erstreckt.

5. Vorrichtung (10) nach einem der vorherigen Ansprüche, **gekennzeichnet dadurch, dass**:
- die ringförmige Struktur eine Dicke (E) längs der Hauptachse (xx') und eine Breite (L) in radialer Richtung zu dieser Achse aufweist,
- die ringförmige Struktur (11) eine radial verlaufende Öffnung (15) aufweist, die sich über ein Stück der Dicke (E) der ringförmigen Struktur und in radialer Richtung über die gesamte Breite (L) der ringförmigen Struktur erstreckt, und
- das Messer (30) sich wenigstens teilweise in das Innere oder in die Verlängerung der Öffnung (15) erstreckt, um den Span zu entfernen, der während des Schabens gebildet wird.

6. Vorrichtung (10) nach einem der vorherigen Ansprüche, **gekennzeichnet dadurch, dass** die ringförmige Struktur (11) teilweise ausgespart ist und aus Kunststoff(en) hergestellt ist.

7. Vorrichtung (10) nach einem der vorherigen Ansprüche, **gekennzeichnet dadurch, dass** die ringförmige Struktur (11) auf ihrer äußeren Oberfläche (11a) Vertiefungen (16) aufweist, um die Vorrichtung (10) in die Hand zu nehmen, und insbesondere konkave Vertiefungen, die geeignet sind, um den Daumen und den Zeigefinger oder den Mittelfinger einer Hand aufzunehmen.

8. Vorrichtung (10) nach einem der vorherigen Ansprüche, **gekennzeichnet dadurch, dass** das Messer (30) im Querschnitt eine gebogene Kerbe (36) in der Nähe seiner Schneidkante (32) aufweist.

9. Vorrichtung (10) nach einem der vorherigen Ansprüche, **gekennzeichnet dadurch, dass** das Messer (30) in einen Hohlraum (14) der ringförmigen Struktur (11) geklebt wird und einen Ausschnitt (34) oder eine Ausstülpung aufweist, deren Form geeignet ist, in eine komplementäre Form einzugreifen, die in dem Hohlraum (14) der ringförmigen Struktur (11) hergestellt worden ist, um das Messer (30) während der Rotation seitlich zu blockieren.

10. Vorrichtung nach einem der vorherigen Ansprüche, **gekennzeichnet dadurch, dass**
- das Messer (30) sich über eine festgelegte Strecke in den Hohlraum erstreckt, der in der ringförmigen Struktur längs der Hauptachse ausgespart worden ist,
- die Schneidkante (32) des Messers durch einen Rücksprung (38) unterbrochen ist, so dass das Messer nur über ein Stück der festgelegten Strecke aus der inneren, peripheren Oberfläche der ringförmigen Struktur hervorragt.

## Claims

1. Manual device (10) for scraping by rotation about the external surface (115; 125) of a tube (112; 120) of plastics material, the device (10) comprising:
- an annular structure (11) having a passage (20) which extends along a principal axis (xx') and which is delimited by an internal peripheral surface (12) of the annular structure which is to receive the tube tightly in order to guide it,
- a blade (30) secured to the annular structure (11) and having a cutting edge (32) extending beyond the internal peripheral surface to form a projection into the passage (20), **characterised in that** the passage extends right through the annular structure and is partially obstructed by a shoulder (50) defining a region (52) restricting the passage, the shoulder having a height (h), relative to the internal peripheral surface of the annular structure, which is slightly smaller than that (s) of the projection formed by the cutting edge relative to the internal peripheral surface of the annular structure, so that the shoulder defines an abutment for a non-scraped portion (112a) of the tube and permits the passage of a scraped portion (112b) of the tube through the restriction.

2. Device according to claim 1, **characterised in that** the cutting edge extends axially in the passage (20), at a distance from the shoulder and at least as far as the limit of the region (52) for restricting the passage, and even partially into that region (52).

3. Device according to claim 1 or claim 2, **characterised in that**:
- the annular structure (11) is slightly flexible and has a thickness (E) along the principal axis (xx') and a width (L) radial to that axis,
- the annular structure has a radial slot (13) extending through the entire thickness and the entire width of the annular structure, and
- the radial slot (13) is substantially diametrically opposite the blade (30).

4. Device (10) according to claim 3, **characterised in that** the slot (13) of the annular structure (11) extends substantially along the principal axis (xx') of the annular structure.

5. Device (10) according to any one of the preceding claims, **characterised in that**:
- the annular structure has a thickness (E) along the principal axis (xx') and a width (L) radial to that axis,
- the annular structure (11) has a radial opening (15) which extends over a portion of the thickness (E) of the annular structure and radially over the entire width (L) of the annular structure, and
- the blade (30) extends at least partially into or as an extension of the opening (15) in order to remove the shaving formed during the scraping operation.

6. Device (10) according to any one of the preceding claims, **characterised in that** the annular structure (11) is partially hollowed out and is produced from plastics material(s).

7. Device (10) according to any one of the preceding claims, **characterised in that** the annular structure (11) has recessed shapes (16) on its external surface (11a) which enable the device (10) to be gripped in the hand, in particular concave shapes adapted to receive the thumb and the index finger or the middle finger of a hand.

8. Device (10) according to any one of the preceding claims, **characterised in that** the blade (30) has, in cross-section, an inwardly curved notch (36) near its cutting edge (32).

9. Device (10) according to any one of the preceding claims, **characterised in that** the blade (30) is adhesively bonded in a recess (14) in the annular structure (11) and has a scallop (34) or a protuberance, the shape of which is suitable for fitting a complementary shape formed in the recess (14) of the annular structure (11), in order to lock the blade (30) laterally in rotation.

10. Device according to any one of the preceding claims, **characterised in that**:
- the blade (30) extends over a specific distance in a recess formed in the annular structure along the principal axis,
- the cutting edge (32) of the blade is interrupted by a step (38), so that the blade projects from the internal peripheral surface of the annular structure only over a portion of said specific distance.
